# EUROPEAN PATENT APPLICATION

(11) **EP 0 654 445 A1**
(43) Date of publication of application: **24.05.1995**
(21) Application number: 94118251.1
(22) Date of filing: 19.11.1994
(51) Int. Cl.: C01F 17/00

(54) **Method for the preparation of cerium carbonate powder**

(30) Priority: 24.11.1993 JP 293169/93
(71) Applicant: Shin-Etsu Chemical Co., Ltd., Chiyoda-ku Tokyo 100 (JP)
(72) Inventor: Saito, Fumihiko, c/o Shin-Etsu Chem. Co., Ltd., Takefu-shi, Fukui-ken (JP); Sakai, Shigeru, c/o Shin-Etsu Chem. Co., Ltd., Takefu-shi, Fukui-ken (JP); Yoshida, Norifumi, c/o Shin-Etsu Chem. Co., Ltd., Takefu-shi, Fukui-ken (JP)
(74) Representative: Fuchs, Luderschmidt & Partner Patentanwälte

(57) **Abstract**

Proposed is a method for the preparation of cerium carbonate containing alkaline earth metal impurities such as calcium and barium in a greatly reduced amount as compared with the starting cerium compound. The method comprises addition of an aqueous solution of a water-soluble carbonate compound, e.g., ammonium (hydrogen) carbonate, to an aqueous solution of a water-soluble cerium salt, e.g., cerium nitrate, as the precipitation medium of cerium carbonate only when the pH value of the precipitation medium is in the range from 2.0 to 5.0 so as to greatly decrease coprecipitation of the alkaline earth metal impurities with cerium carbonate.

## Description

### BACKGROUND OF THE INVENTION

The present invention relates to a method for the preparation of a cerium carbonate powder. More particularly, the invention relates to a method for the preparation of a cerium carbonate powder containing a particularly reduced amount of alkaline earth metal impurities.

Rare earth carbonates including cerium carbonate are sometimes required to contain alkaline earth metal impurities such as magnesium, calcium, strontium and barium in a particularly reduced amount because alkaline earth metal impurities may exhibit very adverse influences on the performance of various kinds of products derived from cerium carbonate, such as ceramic materials for electronic use and optical materials, e.g., scintillators and phosphors, even when the impurity level thereof is extremely low to be in a so-called trace amount.

Rare earth carbonates in general including cerium carbonate are purified conventionally by the re-precipitation method in order to reduce the content of impurities including alkaline earth metal impurities. Namely, a crude rare earth oxide powder is dissolved in a mineral acid such as nitric and hydrochloric acid to form an acidic aqueous solution of the rare earth salt, into which oxalic acid or a water-soluble oxalate is added in the form of an aqueous solution to precipitate the oxalate of the rare earth element in such an acidic pH range at which precipitation of the alkaline earth metals hardly takes place followed by the calcination of the rare earth oxalate to give a rare earth oxide which is re-dissolved in an inorganic acid to give an aqueous solution of the rare earth salt into which a water-soluble carbonate is added so as to precipitate the rare earth ions in the form of the carbonate of the rare earth element. This re-precipitation method, however, is not efficient especially when the rare earth element is cerium because no sufficient decrease in the content of the alkaline earth metal impurities cannot be obtained by the re-precipitation method in addition to the problem that, while the above described re-precipitation method involves twice of dissolution of a rare earth oxide in an inorganic acid, cerium (IV) oxide is dissolved not so readily in an inorganic acid taking an unduly long time for complete dissolution to greatly decrease the productivity of the process. Although the ion exchange method or solvent extraction method can be applied to the separation and removal of alkaline earth metal impurities from rare earth elements, these methods are not practicable because of the high costs.

### SUMMARY OF THE INVENTION

The present invention accordingly has an object to provide a novel and improved method for the preparation of cerium carbonate of which the content of alkaline earth metal impurities is greatly reduced.

Thus, the method of the present invention for the preparation of cerium carbonate of a reduced content of alkaline earth metal impurities comprises the steps of
(a) adjusting the pH value of an aqueous solution of a water-soluble salt of cerium to be not lower than 2.0 but lower than 5.0;
(b) introducing, into the aqueous solution of the water-soluble salt of cerium as a precipitation medium, an aqueous solution of a water-soluble carbonate compound or carbon dioxide gas and ammonia gas or ammonia water jointly to precipitate cerium carbonate in the precipitation medium;
(c) terminating introduction of the aqueous solution of a water-soluble carbonate compound or carbon dioxide gas into the precipitation medium before the pH value of the precipitation medium exceeds 5.0; and
(d) separating the precipitates of cerium carbonate from the precipitation medium.

### DETAILED DESCRIPTION OF THE PREFERRED EMBODIMENTS

As is described above, the method of the present invention is basically a precipitation method in which an aqueous solution of a water-soluble cerium salt and an aqueous solution of a water-soluble carbonate compound are mixed together so as to precipitate cerium carbonate while the most characteristic feature of the inventive method consists in that the pH value of the precipitation medium is kept in the range from 2.0 to 5.0 throughout the procedure of the precipitation reaction. In other words, the aqueous solution of a water-soluble carbonate as the precipitant is introduced into the aqueous solution of a water-soluble cerium salt as a precipitation medium only when the pH value of the precipitation medium is in the range from 2.0 to 5.0. This unique method has been established as a result of the extensive investigations undertaken by the inventors directing their attention particularly to the phenomenon of coprecipitation of the alkaline earth metal impurities in relation to the conditions of the precipitation medium in the precipitation reaction of cerium carbonate. When cerium carbonate is prepared adequately according to this inventive method, the content of the alkaline earth metal impurities in the cerium carbonate product relative to cerium can be as small as one half or even smaller as compared with the content of the impurities in the starting aqueous solution of the water-soluble cerium salt.

The above mentioned investigations undertaken by the inventors led to a conclusion that the most important factor which influences the phenomenon of coprecipitation of alkaline earth metal impurities with cerium carbonate is the value of pH of the precipitation medium in which the precipitation reaction of cerium carbonate is performed by the addition of an aqueous solution of a water-soluble carbonate compound, such as ammonium carbonate and ammonium hydrogen carbonate, to an aqueous solution of a water-soluble cerium salt as the precipitation medium. Namely, it is a novel and unexpected discovery that coprecipitation of alkaline earth metal impurities with cerium carbonate can be greatly decreased with good reproducibility to such a level of the impurity content not to exceed one half of that in the starting cerium salt solution relative to the content of cerium when and only when the pH value of the precipitation medium is kept in the range from 2.0 to 5.0 or, preferably, from 3.5 to 4.5 throughout the precipitation reaction of cerium carbonate. When the precipitation reaction of cerium carbonate is performed in an aqueous precipitation medium having a pH value exceeding 5.0, a greatly increased amount of the alkaline earth metal impurities is coprecipitated with the cerium carbonate.

The water-soluble cerium salt to form an aqueous solution can be cerium nitrate, cerium chloride and the like though not particularly limitative thereto. An aqueous solution of these water-soluble cerium salts can be prepared by dissolving cerium carbonate or cerium hydroxide in nitric acid or hydrochloric acid. If available, a back-extract solution from a solvent-extraction process for the separation of rare earth elements can be used as the cerium solution. The water-soluble carbonate compound to form the second aqueous solution to be added to the aqueous solution of a water-soluble cerium salt is preferably ammonium carbonate or ammonium hydrogen carbonate. Ammonia water neutralized by blowing carbon dioxide gas thereinto can be used as an equivalent of an aqueous solution of these carbonate compounds. Though less preferable, carbon dioxide gas and ammonia gas or ammonia water are introduced concurrently or jointly into the precipitation medium. If contamination of the cerium carbonate product with alkali metal impurities is permissible depending on the application, alkali metal carbonates such as sodium carbonate, sodium hydrogen carbonate and the like can be used as the water-soluble carbonate compound.

The concentration of the water-soluble cerium salt in the first aqueous solution is preferably in the range from 0.01 to 2.0 moles/liter. An aqueous solution prepared by dissolving a cerium compound in an inorganic acid is usually acidic having a pH lower than 2.0 so that, in step (a) of the inventive method, the pH of this aqueous solution is adjusted to be not lower than 2.0. This lower limit of the pH value is given because precipitation of cerium carbonate does not take place in an aqueous medium of which the pH value is lower than 2.0 resulting in futile consumption of ammonium carbonate or ammonia not as a precipitant but as a neutralizing agent. This adjustment of the pH value can be performed by the addition of a basic compound such as ammonia but it is also possible to use ammonium carbonate or ammonium hydrogen carbonate.

The above described aqueous solution of a water-soluble cerium salt is admixed with an aqueous solution of a water-soluble carbonate compound at a temperature not exceeding 35 °C or, preferably, 30 °C or, more preferably, at room temperature. When the temperature is too high, a loss is caused in the carbonate ions by the dissipation as carbon dioxide gas. The concentration of ammonium carbonate or ammonium hydrogen carbonate in the second aqueous solution is not particularly limitative but should be at least 0.01 mole/liter because, when the concentration is too low, the volume of the aqueous solution must be so large that a substantial decrease is caused in the productivity of the process. When the aqueous carbonate solution is added to the aqueous solution of the water-soluble cerium salt as the precipitation medium, the pH value of the precipitation medium is gradually increased as the addition of the carbonate solution proceeds.

The water-soluble carbonate compound is used in an amount in the range from 60% to 90% of the stoichiometrically equivalent amount for the complete carbonation of the cerium ions thus to leave a substantial amount of the cerium ions unreacted in the precipitation medium. When the amount of the carbonate compound is too small, the amount of the unreacted cerium ions left unreacted in the medium is increased to decrease the yield of the cerium carbonate product while, when the carbonate compound is introduced into the aqueous solution of the water-soluble cerium salt in an amount to exceed 90% of the equivalent amount, the content of the alkaline earth metal impurities in the cerium carbonate product is unduly increased due to the increased coprecipitation. Needless to say, the equivalent amount of the carbonate compound here implied is the amount to be combined with the cerium ions to form cerium carbonate and does not include the amount of the carbonate compound consumed for the neutralization of an excessive amount of acid when the starting aqueous solution of the water-soluble cerium salt has a pH value, for example, lower than 2.0. It is usual that the pH value of the precipitation medium increasing with the addition of the carbonate solution reaches 5.0 when the amount of the carbonate solution already added to the precipitation medium is about 90% of the equivalent amount so that addition of the carbonate solution to the precipitation medium is then terminated. The thus obtained precipitates of cerium carbonate can be separated from the precipitation medium by a conventional solid-liquid separation means such as filtration followed, if necessary, by washing with water and drying.

As is readily understood from the above given description, the content of the alkaline earth metal impurities contained in the cerium carbonate product obtained by the above described procedure can be further decreased by repeating the above described precipitation procedure. Namely, the cerium carbonate product is again dissolved in nitric acid or hydrochloric acid to form an aqueous solution of cerium nitrate or cerium chloride, into which an aqueous solution of a water-soluble carbonate compound is added under the conditions to satisfy the requirements in the inventive method.

Once a cerium carbonate product containing a greatly reduced amount of alkaline earth metal impurities is obtained, a cerium oxide product containing an equally reduced amount of the alkaline earth metal impurities can readily be obtained by the calcination of the cerium carbonate according to a conventional procedure at a temperature of 250 °C or higher in air. Namely, the content of the alkaline earth metal impurities in the thus obtained cerium carbonate can be one half or lower of the impurity content in the starting aqueous solution of the water-soluble cerium salt relative to the cerium ions and the impurity content in the cerium oxide derived from the carbonate is equally low. The calcination is complete usually within 2 hours though dependent on the calcination temperature which must be 250 °C or higher because, when the calcination temperature is too low, a considerable amount of the cerium carbonate is left undecomposed even by an impractical extension of the calcination time.

In the following, the method of the present invention is illustrated in more detail by way of examples, which, however, never limit the scope of the invention in any way.

### Example 1.

One liter of an aqueous solution of cerium nitrate in a concentration of 0.6 mole/liter, which was acidic with nitric acid in a hydrogen ion concentration [H⁺] of 0.1 mole/liter and contained calcium as an alkaline earth metal impurity in an amount of 100 ppm by weight calculated as Ca/CeO₂, was taken in a beaker of 3 liters capacity and an aqueous solution of ammonium hydrogen carbonate in a concentration of 2 moles/liter was gradually added to the solution in the beaker with agitation to precipitate cerium carbonate under continuous monitoring of the pH value of the precipitation medium to ensure that the pH did not exceed 5.0. The pH value of the precipitation medium reached 5.0 when the volume of the carbonate solution added to the beaker was 0.9 liter so that addition of the carbonate solution was terminated. The thus obtained slurry of the precipitated cerium carbonate was filtered to collect the precipitates of cerium carbonate which were washed with 2 liters of deionized water followed by drying to give a cerium carbonate powder in a yield of 90% based on the cerium ions contained in the starting aqueous solution. The cerium carbonate product was subjected to the analysis of the ICP (inductively coupled plasma) emission spectrophotometric analysis to find that the content of the calcium impurity was 10 ppm by weight based on cerium oxide CeO₂.

The cerium carbonate obtained here was transferred into an alumina crucible and calcined at 500 °C for 2 hours in an atmosphere of air to give cerium oxide, of which the content of calcium impurity was determined by the ICP method to give a value of 10 ppm by weight based on CeO₂.

### Example 2.

One liter of an aqueous solution of cerium nitrate in a concentration of 0.6 mole/liter, which was acidic with nitric acid in a hydrogen ion concentration [H⁺] of 0.1 mole/liter and contained barium as an alkaline earth metal impurity in an amount of 100 ppm by weight calculated as Ba/CeO₂, was taken in a beaker of 3 liters capacity and an aqueous solution of ammonium hydrogen car-bonate in a concentration of 2 moles/liter was gradually added to the solution in the beaker with agitation to precipitate cerium carbonate under continuous monitoring of the pH value of the precipitation medium to ensure that the pH did not exceed 5.0. The pH value of the precipitation medium reached 5.0 when the volume of the carbonate solution added to the beaker was 0.9 liter so that addition of the carbonate solution was terminated. The thus obtained slurry of the precipitated cerium carbonate was filtered to collect the precipitates of cerium carbonate which were washed with 2 liters of deionized water followed by drying to give a cerium carbonate powder in a yield of 90% based on the cerium ions contained in the starting aqueous solution. The cerium carbonate product was subjected to the analysis by the ICP method to find that the content of the barium impurity was 20 ppm by weight based on cerium oxide CeO₂.

The cerium carbonate obtained here was transferred into an alumina crucible and calcined at 500 °C for 2 hours in an atmosphere of air to give cerium oxide, of which the content of barium impurity was determined by the ICP method to give a value of 20 ppm by weight based on CeO₂.

### Comparative Example 1.

The experimental procedure was substantially the same as in Example 1 except that the total volume of the aqueous solution of ammonium hydrogen carbonate was 1.0 liter instead of 0.9 liter so that the pH value of the precipitation medium was 6.0 after termination of the addition of the carbonate solution. The slurry of the thus formed precipitates of cerium carbonate was filtered to collect the precipitates and the cerium carbonate was washed with 2 liters of deionized water followed by drying to give a powder of cerium carbonate. The yield of the cerium carbonate product was 98%. The content of calcium impurity in the thus obtained cerium carbonate was 90 ppm by weight calculated as Ca/CeO₂ as determined by the ICP method.

### Comparative Example 2.

The same cerium nitrate solution and the same carbonate solution as used in Example 1 were used. Thus, 0.9 liter of the carbonate solution having a pH of 7.4 was taken in a 3 liter beaker and 1 liter of the cerium nitrate solution was gradually added to the carbonate solution in the beaker under agitation to precipitate cerium carbonate. The thus obtained aqueous slurry was filtered to collect the precipitates of cerium carbonate and the cerium carbonate was washed with 2 liters of deionized water followed by drying to give a powder of cerium carbonate. The content of calcium impurity in the thus obtained cerium carbonate was 95 ppm by weight calculated as Ca/CeO₂ as determined by the ICP method.

## Claims

1. A method for the preparation of cerium carbonate containing alkaline earth metal impurities in a reduced amount which comprises the steps of:
(a) adjusting the pH value of an aqueous solution of a water-soluble salt of cerium to be not lower than 2.0 but lower than 5.0;
(b) introducing, into the aqueous solution of the water-soluble salt of cerium as a precipitation medium, an aqueous solution of a water-soluble carbonate compound or carbon dioxide gas and ammonia gas or ammonia water jointly to precipitate cerium carbonate in the precipitation medium;
(c) terminating introduction of the aqueous solution of a water-soluble carbonate compound or carbon dioxide gas into the precipitation medium before the pH value of the precipitation medium exceeds 5.0; and
(d) separating the precipitates of cerium carbonate from the precipitation medium.

2. The method for the preparation of cerium carbonate containing alkaline earth metal impurities in a reduced amount as claimed in claim 1 in which the water-soluble carbonate compound is ammonium carbonate or ammonium hydrogen carbonate.

3. The method for the preparation of cerium carbonate containing alkaline earth metal impurities in a reduced amount as claimed in claim 1 in which the water-soluble cerium salt is cerium nitrate or cerium chloride.

4. The method for the preparation of cerium carbonate containing alkaline earth metal impurities in a reduced amount as claimed in claim 1 in which the aqueous solution of a water-soluble carbonate compound is added to the precipitation medium when the pH value of the precipitation medium is in the range from 3.5 to 4.5.

5. The method for the preparation of cerium carbonate containing alkaline earth metal impurities in a reduced amount as claimed in claim 1 in which the concentration of the water-soluble cerium salt in the aqueous solution is in the range from 0.01 to 2.0 moles/liter.

6. The method for the preparation of cerium carbonate containing alkaline earth metal impurities in a reduced amount as claimed in claim 1 in which the amount of the water-soluble carbonate compound added to the precipitation medium in step (b) is in the range from 60% to 90% of the stoichiometrically equivalent amount relative to the amount of the water-soluble cerium salt.
